# FASCICULE DE BREVET EUROPEEN

(11) **EP 2 826 082 B1**
(45) Date de publication et mention de la délivrance du brevet: **20.04.2016**
(21) Numéro de dépôt: 13709896.8
(22) Date de dépôt: 14.03.2013
(51) Int. Cl.: H01M 2/02, H01M 2/04, H01M 4/58, H01M 10/0525, H01M 4/485

(54) **ACCUMULATEUR ELECTROCHIMIQUE LI-ION DE MOINDRE POIDS**
LEICHTGEWICHTIGER ELEKTROCHEMISCHER SPEICHER AUF LI-IONEN-BASIS
LOWER WEIGHT LI-ION ELECTROCHEMICAL ACCUMULATOR

(30) Priorité: 15.03.2012 FR 1252349
(43) Date de publication de la demande: 21.01.2015
(73) Titulaire: Commissariat à l'Énergie Atomique et aux Énergies Alternatives, 75015 Paris (FR)
(72) Inventeur: CHAMI, Marianne, F-38600 Fontaine (FR); JOST, Pierre, 38220 Saint-Pierre de Mésage (FR)
(74) Mandataire: Brevalex
(86) Numéro de dépôt international: PCT/EP2013/055273
(87) Numéro de publication internationale: WO 2013/135834

(56) Documents cités:
- WO-A1-2012/025505
- US-A1- 2003 129 487

## Description

### DOMAINE TECHNIQUE

La présente invention concerne le domaine des générateurs électrochimiques au lithium, qui fonctionnent selon le principe d'insertion ou de désinsertion, ou autrement dit intercalation-désintercalation, de lithium dans au moins une électrode.

L'invention vise à réaliser un nouvel emballage d'accumulateur électrochimique et plus particulièrement celui d'une batterie Li-ion et vise à remplacer les emballages de type souple ou rigide connus.

### ART ANTÉRIEUR

L'architecture des batteries Li-ion conventionnelles est une architecture que l'on peut qualifier de monopolaire, car avec une ou plusieurs cellule(s) électrochimique(s) comportant chacune une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733,
- une géométrie en empilement telle que divulguée dans les demandes de brevet US 2008/060189, US 2008/0057392, et brevet US 7335448.

Une architecture monopolaire est réalisée par bobinage. Le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui même déposé sur un autre collecteur de courant. Cette architecture monopolaire a comme avantage principal d'avoir une grande surface active de matériau mais la différence de potentiel est restreinte à la valeur unitaire de la différence de potentiel entre les deux matériaux d'électrode utilisés, ce qui est également le cas de la géométrie en empilement.

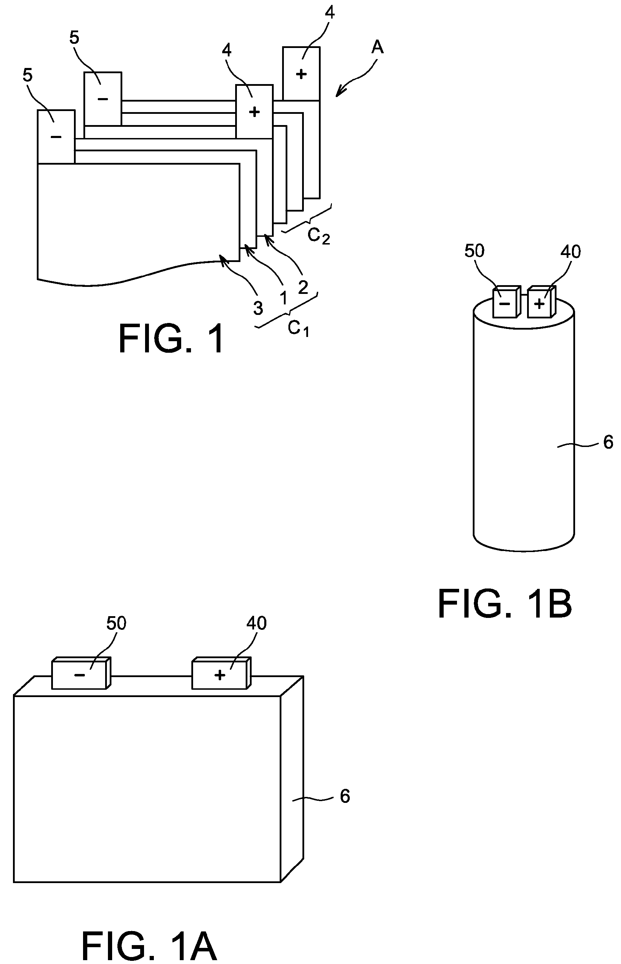

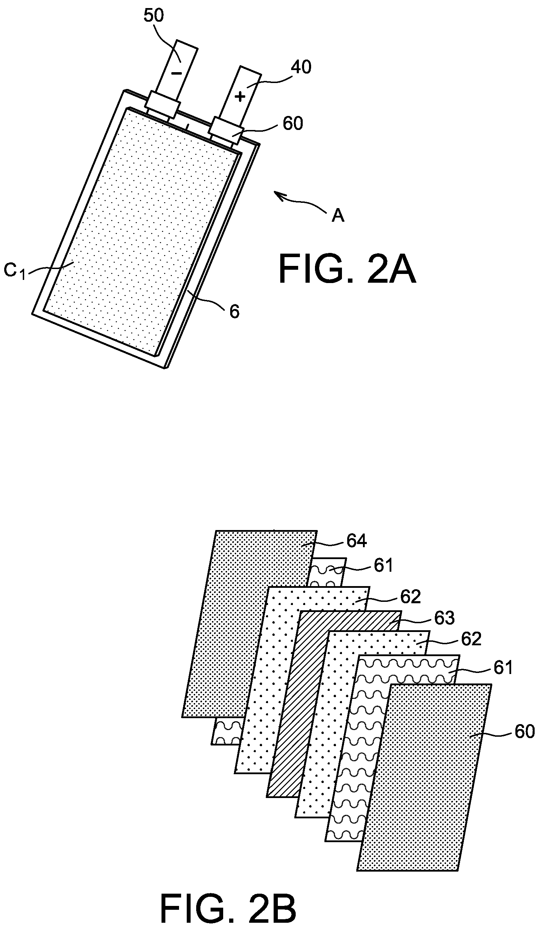

Ainsi, tel que représenté schématiquement en figures 1, 1B et 2A , une batterie ou accumulateur lithium-ion A d'architecture monopolaire comprend usuellement une cellule électrochimique C1 constituée d'un constituant d'électrolyte 1 entre une électrode positive ou cathode 2 et une électrode négative ou anode 3, un collecteur de courant 4 connecté à la cathode 2, un collecteur de courant 5 connecté à l'anode 3 (figure 1) et enfin, un emballage 6 agencé pour contenir la cellule électrochimique avec étanchéité tout en étant traversé par une partie 40 et 50 appartenant respectivement aux collecteurs de courant 4 et 5 (figures 1A et 1B).

Le constituant d'électrolyte 1 peut être sous forme solide, sous forme liquide ou sous forme de gel. Sous cette dernière forme, le constituant d'électrolyte peut comprendre un séparateur en polymère ou en composite, éventuellement microporeux, imbibé d'électrolyte(s) organique(s) ou de type liquide ionique qui permet le déplacement de l'ion lithium, de la cathode 2 à l'anode 3 pour une charge, et inversement pour une décharge, ce qui génère le courant électrique. L'électrolyte est en général un mélange de solvants organiques, par exemple des carbonates, dans lesquels est ajouté un sel de lithium typiquement LiPF₆.

L'électrode positive ou cathode 2 est constituée de matériaux d'insertion, des cations lithium, qui sont en général composite, comme le LiFePO₄, LiCoO₂, LiNi_{0.33}Mn_{0.33}Co_{0.33}O_{2...}

L'électrode négative ou anode 3 est très souvent constituée de carbone graphite ou en Li₄Ti₅O₁₂ (matériau titanate), éventuellement également à base de silicium ou de composite formé à base de silicium.

Le collecteur de courant 4 connecté à l'électrode positive 2 est en général en aluminium.

Le collecteur de courant 5 connecté à l'électrode négative 3 est en général en cuivre, en cuivre nickelé ou en aluminium.

Une batterie ou accumulateur lithium-ion peut comprendre bien évidemment une pluralité de cellules électrochimiques C1, C2, etc., qui sont empilées l'une sur l'autre (figure 1).

Selon le type d'application visée, on cherche à réaliser soit un accumulateur fin et flexible, soit un accumulateur rigide : l'emballage 6 est alors soit souple (figure 2A), soit rigide et constitué en quelque sorte d'un boitier (figure 1A sous forme de parallépipède rectangle ; figure 1B sous forme de cylindre).

A ce jour, les emballages souples peuvent être fabriqués à partir d'un matériau multicouches constitué typiquement d'un empilement de couches d'aluminium recouvertes par un polymère. Dans la plupart des cas, le polymère recouvrant l'aluminium est choisi parmi le polyéthylène (PE), le propylène, le polyamide (PA) ou peut être sous la forme d'une couche adhésive constituée de polyester-polyuréthane. Les sociétés Showa Denko et Daï Nippon Printing commercialisent ce type de matériaux composite pour une utilisation en tant qu'emballage de batteries. Ce type d'emballage souple fabriqué à partir d'un empilement de couches en aluminium fourni par la société Showa Denko est commercialisé par exemple sous les références N° ADR-ON25/AL40/CPP40 ou N° ADR-ON25/AL40/CPP80. On peut voir sur la figure 2A que l'emballage souple 6 est agencé pour contenir la(es) cellule(s) électrochimique C1, C2 avec étanchéité tout en étant traversé par une partie 40 et 50 appartenant respectivement aux lamelles formant les collecteurs de courant 4 et 5, et qui s'étendent dans le plan de la (des) cellule(s) électrochimique(s). L'emballage souple 6 comprend un renfort 60 en polymère, typiquement du polyéoléfine, au niveau de la traversée des collecteurs de courant 4 et 5, pour optimiser le scellage à chaud. Ainsi, comme représenté en figure 2B, un emballage souple peut être constitué par un empilement de couches 60 à 64, de l'intérieur vers l'extérieur d'un accumulateur, comme suit :
- couche de polyoléfine 60, typiquement d'épaisseur de l'ordre de 50µm,
- première couche de colle 61 typiquement d'épaisseur de l'ordre de quelques µm,
- première couche, dite couche de fondation 62, destinée à protéger contre les attaques chimiques acides, typiquement d'épaisseur de l'ordre de quelques µm,
- feuillard en aluminium 63, typiquement d'épaisseur de l'ordre de 40µm,
- deuxième couche de fondation 62; première couche de colle 61 typiquement d'épaisseur de l'ordre de quelques µm,
- couche de polymère 64, typiquement d'épaisseur de l'ordre de 20µm.

Comparativement à des boitiers rigides tels que montrés en figures 1A et 1B, l'avantage principal d'un emballage souple d'accumulateur lithium-ion est sa légèreté. C'est pourquoi, lorsqu'on cherche à réaliser des accumulateurs lithium-ion avec des densités d'énergie plus élevées, on utilise des emballages souples. L'inconvénient majeur de ces emballages souples est le problème d'étanchéité à long terme, c'est-à-dire, la tenue chimique du scellage, qui se détériore fortement au cours du temps. Ainsi la demanderesse a déjà pu mettre en évidence qu'au bout d'une période conséquente, typiquement de 6 mois à 1 an, il pouvait se produire une oxydation au niveau du pôle positif (collecteur de courant positif) de la batterie. Cette oxydation conduit à une ouverture de l'emballage souple ou autrement dit, à une perte de l'étanchéité recherchée et en conséquence, à des fuites de l'électrolyte. Or, ces fuites peuvent être dangereuses car le produit chimique qui s'échappe alors de l'emballage peut contenir de l'acide fluorhydrique. Sous l'effet de la chaleur, l'acide fluorhydrique échappé peut conduire à l'ignition de la batterie.

Les boîtiers 6 sont choisis le plus souvent en un métal relativement léger et peu coûteux comme l'aluminium, et comportent chacun des connectiques externes 40 et 50, au boîtier qui sont rapportées par soudure comme montré en figures 1A et 1B. L'avantage principal des boîtiers rigides en tant qu'emballage d'accumulateur lithium-ion est la conservation de leur étanchéité au cours du temps puisque le scellage, au final, est réalisé par soudure, en général par laser. Leur inconvénient est leur poids, malgré l'utilisation d'un métal de masse volumique intrinsèquement faible.

De nombreuses améliorations ont déjà été proposées pour la conception des boitiers rigides en tant qu'emballage d'accumulateur lithium-ion.

Certaines améliorations concernent la nature du(des) matériaux constitutifs du boîtier 6.

Ainsi, on peut citer la demande de brevet WO 2010/113502A1 qui divulgue la réalisation d'un boîtier métallique constitué d'une feuille d'acier revêtue d'une couche de nickel et d'une couche de cuivre, et de nickel entre ladite couche de nickel et la feuille d'acier. D'une part, une telle solution ne permet pas de diminuer le poids total du boîtier. D'autre part, elle augmente nécessairement le coût de ce dernier en comparaison aux boîtiers en aluminium connus.
On peut également citer la demande de brevet US20030129487 qui concerne une batterie possédant un emballage en aluminium ou en alliage d'aluminium recouvert d'une résine synthétique.

Un but de l'invention est alors de proposer une nouvelle solution d'emballage pour un accumulateur électrochimique qui pallie à la fois les inconvénients des emballages souples et rigides des accumulateurs électrochimiques actuellement existants.

Un autre but de l'invention est de proposer une solution d'emballage d'accumulateurs électrochimiques qui ne présente pas de problème d'étanchéité à long terme et qui soit de poids moindre.

### EXPOSÉ DE L'INVENTION

Pour ce faire, l'invention a pour objet un accumulateur électrochimique comprenant au moins une cellule électrochimique constituée d'une anode et d'une cathode de part et d'autre d'un électrolyte, deux collecteurs de courant dont l'un est relié à l'anode et l'autre à la cathode, et un emballage agencé pour contenir la(les) cellule(s) électrochimique avec étanchéité, tout en étant traversé par une partie des collecteurs de courant formant les pôles.

Selon l'invention l'emballage comporte :
- une partie métallique à laquelle les collecteurs de courant formant les pôles sont solidarisés, la partie métallique comprenant deux zones solidarisées entre elles par soudure métallique,
- une partie à base de polymère durci solidarisée à la partie métallique.

Ainsi, la solution selon l'invention consiste à constituer un emballage d'accumulateur électrochimique mixte, d'une part à base de métal pour conserver les soudures métalliques pour le scellage de l'emballage, et d'autre part à base de polymère pour alléger le poids de l'emballage, voire lui conférer une certaine souplesse.

La présente demande porte également sur un accumulateur électrochimique comprenant au moins une cellule électrochimique constituée d'une anode et d'une cathode de part et d'autre d'un électrolyte, deux collecteurs de courant dont l'un est relié à l'anode et l'autre à la cathode, et un emballage comportant :
- un couvercle traversé par une partie des collecteurs de courant formant les pôles, le couvercle comportant une première zone métallique ;
- un contenant comportant une deuxième zone métallique et une troisième zone métallique ;
- un élément à base de polymère durci étant solidarisé à au moins la troisième zone métallique ;
l'épaisseur de la première zone métallique et l'épaisseur de la deuxième zone métallique étant adaptées de sorte à être solidarisées entre elles par soudure métallique, l'épaisseur de la troisième zone métallique étant d'épaisseur inférieure par rapport à la deuxième zone métallique.

La partie métallique de l'emballage comprend donc une partie métallique dont l'épaisseur est plus importante au niveau des zones métalliques solidarisées entre-elles et au niveau des zones permettant le passage des pôles.

Avantageusement, les parties métalliques solidarisées entre elles le sont par soudure métallique, la partie métallique étant moins épaisse au niveau des zones de l'emballage qui ne sont pas nécessaires à la soudure métallique et au niveau des zones ne permettant pas le passage des collecteurs de courant formant les pôles, de manière à alléger le poids de l'emballage.

En d'autres termes, la zone ou les autres zones de la partie métallique qui ne sont pas nécessaires à la soudure métallique et aux passages des collecteurs de courant formant les pôles, peuvent être d'épaisseur inférieure de sorte à alléger le poids de l'emballage. Au niveau de la zone ou des zones de la partie métallique de plus faible épaisseur, cette zone ou ces zones peuvent être renforcées mécaniquement par la partie à base de polymère durci. Eventuellement, la zone ou ces zones de la partie métallique n'étant pas nécessaires à la soudure et aux passages des collecteurs, peuvent être substituées par uniquement le polymère durci.

Autrement dit, l'invention permet de diminuer le poids de l'emballage, c'est-à-dire le boîtier, tout en conservant une étanchéité parfaite sur le long terme grâce au scellage par soudure métallique au niveau des connectiques de sortie, i.e. les pôles.

En d'autres termes, la présente invention propose un emballage d'accumulateur électrochimique, en particulier un accumulateur lithium-ion, qui se distingue des emballages tout métal selon l'art antérieur, puisque les portions métalliques sont conservées uniquement dans les zones nécessaires au scellage final et au passage des connectiques vers l'extérieur de l'emballage, avec une épaisseur de métal la plus faible possible dans toutes les zones non nécessaires.

La partie métallique de l'emballage selon l'invention, est choisie pour sa conductivité électrique. Ainsi, le métal est choisi de préférence parmi les aciers inoxydables, le titane ou l'aluminium. Parmi ceux-ci, l'aluminium est préféré pour alléger au maximum le poids de l'emballage.

En ce qui concerne la solidarisation de la partie métallique avec celle à base de polymère durci, le métal recouvre de préférence la partie interne de l'emballage, de sorte qu'aucune zone d'interface métal/polymère ne soit apparente à l'intérieur de l'emballage. Ainsi, la (les) cellules électrochimiques constituant l'accumulateur sont de préférence uniquement en contact avec le métal, de préférence l'aluminium, recouvrant la partie interne de l'emballage.

L'épaisseur du métal est choisie avantageusement la plus faible possible pour alléger au maximum le poids de l'emballage. L'épaisseur du métal est de préférence au minimum égale à 0,1 mm, de préférence inférieure ou égale à 0,5 mm, pour permettre des soudures laser avec les collecteurs de courant.

L'épaisseur de la paroi en polymère durci peut être comprise entre 0,1 mm et 0,5 mm.

L'épaisseur de la paroi métallique, en contact physique avec la paroi en polymère durci peut être inférieure à 0,5 mm. Elle est de préférence la plus fine possible de sorte à alléger le plus possible le poids de l'emballage. Par exemple, une paroi mixte de l'emballage comportant une paroi métallique au contact d'une paroi à base de polymère durci, dont l'épaisseur totale est d'environ de 0,5mm, peut comprendre une paroi métallique dont l'épaisseur peut être comprise entre 0,1 mm et 0,4mm, l'épaisseur de la paroi à base de polymère durci étant comprise entre 0,4mm et 0,1mm. En d'autres termes, une paroi mixte de l'emballage comportant une paroi métallique au contact d'une paroi à base de polymère durci, peut comporter entre 20% et 80% de polymère durci.

La partie à base de polymère durci peut être une matrice d'un matériau composite comprenant au moins un renfort.

En tant que partie à base de polymère durci de l'emballage selon l'invention, des résines non chargées ou chargées peuvent être employées. Les résines sont de préférence non conductrices, même si des résines conductrices peuvent être employées.

En tant que parties à base de polymère(s) durci(s) qui conviennent dans le cadre de l'invention, on peut envisager :
- des résines thermodurcissables (Polyesters saturés ou insaturés, Vinylesters, Epoxy, polyuréthanes et polyurées, polyimides, bismaléimides,...) ; un renfort avec des fibres longues peut alors être envisagé, en particulier si l'on souhaite augmenter la rigidité du boitier, du fait de la stabilité thermique, chimique et dimensionnelle apportée par la réticulation,
- des matrices thermoplastiques, dont des matrices en polyamide, polycarbonate, polyamide-imide, polyéther-imide; dans le cas de matrices thermoplastiques employées en complément des fibres longues tressée ou non, un renfort supplémentaire à l'aide de fibres courtes peut alors être envisagé pour une tenue thermique et mécanique améliorées et une bonne stabilité dimensionnelle. Le boîtier selon l'invention peut dans cette variante être considéré comme « semi-souple » dans le cas où l'épaisseur de la partie métallique est inférieure à 500 µm.

On peut préférentiellement employer des résines époxy, polyuréthane, polyimides, acrylique ou styrèniques avec une température de transition vitreuse Tg élevée. Par Tg élevée, on entend que le polymère durci reste solide à la température d'utilisation de la cellule, typiquement, supérieur à 70 °C. Ces résines ont l'avantage de résister à d'éventuelles fuites d'électrolyte.

Un renfort selon l'invention peut être un tissu comme un taffetas, serge, satin,... ou autre avec une armature différente. Il peut également être non tissé (mat). Le renfort selon l'invention peut être constitué de fibres longues ou de fibres courtes.

Le matériau de renfort(s) selon l'invention peut consister en des oxydes et hydrates métalliques ou des charges organiques (charges cellulosiques utilisées en tant que charges des résines thermodurcissables), minérales (craies de carbonates), silices, talcs (qui apportent une isolation thermique et une résistance à l'eau), wollastonite (principalement utilisée avec les polyamides), argiles et aluminosilicates.

Un renfort selon l'invention peut contenir des fibres de verre (fibres coupées, poudre, billes creuses, microsphères), de carbone (noir de carbone, nanotubes de carbone, fibres de carbones coupées), de cellulose, de silice (ou de quartz), d'aramide, de bore, polyéthylène de module élevé, ou des fibres naturelles (maïs, bananier, cocotier ...).

Un renfort selon l'invention peut appartenir à chacune des familles ci-dessus ou être composé d'un mélange des familles ci-dessus.

De préférence, un renfort selon l'invention est un matériau à base de fibres ou constitué par un tissu qui permettent de figer aisément l'épaisseur du composite, c'est-à-dire l'épaisseur totale de la matrice et du renfort.

Le renfort peut également être simplement constitué par la partie métallique interne du boîtier qui peut alors être réalisée avec des protubérances de toutes formes. Les protubérances sont alors noyées dans la résine afin de renforcer la rigidité du boîtier selon l'invention.

L'emballage d'accumulateur selon l'invention peut comporter un dispositif de sécurité pour éviter l'accumulation des gaz à l'intérieur de l'emballage et permettre ainsi leur évacuation lorsque la pression interne excède une valeur prédéterminée. Un dispositif de sécurité peut consister en au moins une zone de la partie métallique ou celle à base de polymère durci, adaptée pour être dégradée physiquement dans le cas où la cellule électrochimique fonctionne en surpression, de sorte à libérer les gaz contenus dans l'emballage vers l'extérieur. La zone de sécurité ainsi définie peut être localisée à n'importe quel endroit de l'emballage, et peut avoir n'importe quelle forme. De préférence, elle est de forme circulaire, située au centre du couvercle de l'emballage (boîtier). On obtient ainsi un dégazage efficace en cas de surpression dans l'emballage. De préférence encore, la zone de sécurité présente une surface petite comparativement à celle de l'emballage et ce pour éviter de fragiliser ce dernier en utilisation normale. On peut envisager plusieurs zones circulaires à n'importe quel endroit de l'emballage.

La zone de sécurité ainsi définie peut être :
- une zone de polymère souple métallisé sur sa face interne et/ou externe, pour une isolation vis-à-vis des gaz extérieurs. L'épaisseur et la nature du polymère, ainsi que la métallisation, sont choisies de sorte à permettre à la zone d'être dégradée aisément sous une pression de l'ordre de quelques bars, ce qui correspond en pratique à un fonctionnement anormal d'une cellule électrochimique Li-ion. La couche de polymère ou la couche de résine employée pour constituer cette zone de sécurité, est préférentiellement en matière thermoplastique pour être déformable à température ambiante,
- une zone uniquement en polymère imperméable aux gaz, et adaptée pour se déformer et rompre sous pression. Une zone de polymères multicouches peut aussi être envisagée. Dans cette variante, les polymères les plus internes à l'emballage peuvent être avantageusement partiellement poreux pour permettre la création de poches de gaz, c'est-à-dire, des zones adaptées pour adsorber les gaz relâchés par la(les) cellule(s) électrochimique(s) et ainsi éviter leur accumulation néfaste à l'intérieur de l'emballage.

L'emballage selon l'invention peut être constitué d'un cylindre borgne et d'un couvercle, les zones de la partie métallique peuvent être réalisées respectivement par le bord périphérique du cylindre borgne et par le bord périphérique du couvercle, soudés en entre eux.

Les pôles peuvent être solidarisés au couvercle. Le couvercle peut être en métal et le cylindre borgne en polymère métallisé sur toute sa hauteur.

Le cylindre borgne peut comprendre une paroi métallique uniquement sur une partie de sa hauteur et une paroi à base de polymère durci uniquement sur l'autre partie de sa hauteur. En d'autres termes, l'épaisseur de la paroi métallique peut être nulle à la hauteur d'une paroi à base de polymère durci délimitant le cylindre borgne.

Le cylindre borgne peut comprendre une paroi métallique sur toute sa hauteur et une paroi à base de polymère durci sur uniquement une partie de sa hauteur, superposée à la paroi métallique, vers l'extérieur de l'emballage. La somme des épaisseurs de la paroi métallique et de la paroi à base de polymère durci, situées dans une première partie de la hauteur du cylindre, peut être sensiblement égale à l'épaisseur seule de la paroi métallique située dans une seconde partie de la hauteur du cylindre.

Un accumulateur électrochimique selon l'invention peut être du type Li-ion, dans lequel tous les motifs d'électrode ou électrodes de la (des) cellule(s) à base de matériau d'insertion au lithium négatif sont à base de Li₄Ti₅O₁₂ et tous les motifs d'électrode ou électrodes de la (des) cellule(s) à base de matériau d'insertion au lithium positif sont à base de LiFePO4.

L'invention porte également sur un assemblage comprenant une pluralité d'accumulateurs précédents, dans lequel les pôles de polarité inverse ou de même polarité, entre deux accumulateurs adjacents, sont en contact.

### BRÈVE DESCRIPTION DES DESSINS

D'autres avantages et caractéristiques de l'invention peuvent ressortir à la lecture de la description détaillée faite à titre illustratif et non limitatif en référence aux figures suivantes qui représentent respectivement:
- la figure 1 est une vue schématique en perspective éclatée montrant les différents éléments d'un accumulateur A lithium-ion,
- la figure 1A est une vue en perspective montrant un accumulateur A lithium-ion avec son emballage rigide de forme générale parallélépipédique selon l'état de l'art,
- la figure 1B est une vue en perspective montrant un accumulateur A lithium-ion avec son emballage rigide de forme générale cylindrique selon l'état de l'art,
- la figure 2A est une vue schématique en perspective montrant un accumulateur lithium-ion A avec un emballage souple de forme générale parallélépipédique selon l'état de l'art,
- la figure 2B est une vue éclatée montrant les différents éléments de l'emballage souple de l'accumulateur A lithium-ion selon la figure 2A,
- les figures 3, 3A et 3B sont des vues respectivement en perspective, en coupe selon l'axe A-A, en coupe selon l'axe B-B montrant un accumulateur A lithium-ion avec son emballage rigide de forme générale cylindrique selon un premier mode de réalisation de l'invention,
- les figures 4, 4A et 4B sont des vues respectivement en perspective, en coupe selon l'axe A-A, en coupe selon l'axe B-B montrant un accumulateur A lithium-ion avec son emballage rigide de forme générale cylindrique selon un deuxième mode de réalisation de l'invention,
- les figures 5A, 5B et 5C sont des vues en perspective et de face montrant les différents constituants d'un accumulateur A lithium-ion avant la réalisation définitive de son emballage rigide de forme générale cylindrique selon l'invention,
- les figures 6A et 6B sont des vues respectivement en perspective et en coupe longitudinale montrant les différents constituants d'un accumulateur A lithium-ion et schématisant la réalisation définitive de son emballage rigide de forme générale cylindrique selon une première variante de l'invention,
- les figures 7A et 7B sont des vues respectivement en perspective et en coupe longitudinale montrant les différents constituants d'un accumulateur A lithium-ion et schématisant la réalisation définitive de son emballage rigide de forme générale cylindrique selon une deuxième variante de l'invention,
- les figures 8A et 8B sont des vues respectivement en perspective et en coupe longitudinale montrant les différents constituants d'un accumulateur A lithium-ion et schématisant la réalisation définitive de son emballage rigide de forme générale cylindrique selon une troisième variante de l'invention.

### EXPOSÉ DÉTAILLÉ DE MODES DE RÉALISATION PARTICULIERS

Les figures 1 à 2B sont relatives à des accumulateurs lithium-ion avec emballages souples et rigides selon l'état de l'art : ils ont été commentés en préambule et ne seront donc pas plus détaillés par la suite.

Par souci de clarté, les mêmes éléments de l'état de l'art et selon l'invention sont désignés par les mêmes références.

Selon l'invention, on réalise un accumulateur lithium-ion avec un emballage comprenant une partie métallique uniquement dans les zones nécessaires au scellage final par soudure métallique, et avec une épaisseur de métal la plus faible possible dans toutes les zones non nécessaires aux soudures métalliques. Comparativement aux emballages d'accumulateurs Li-ion selon l'état de l'art, on obtient ainsi un emballage de poids moindre tout en conservant une étanchéité parfaite à long terme.

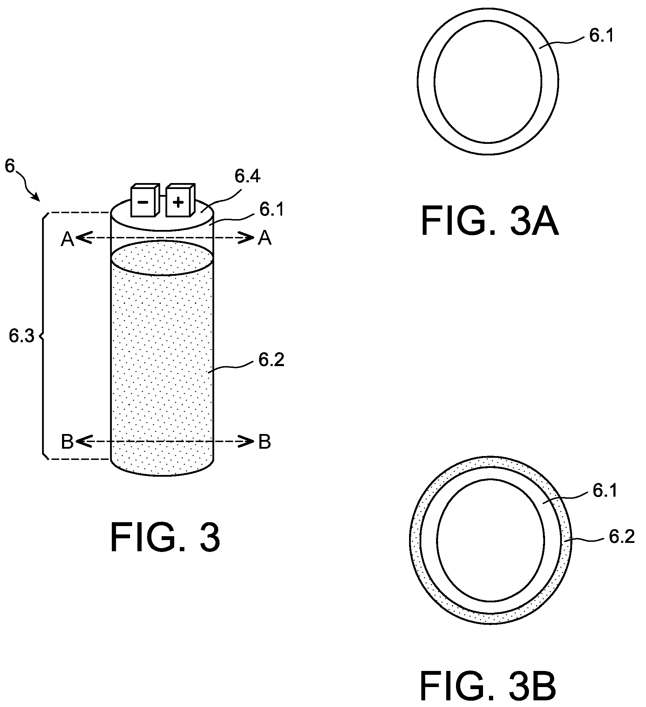

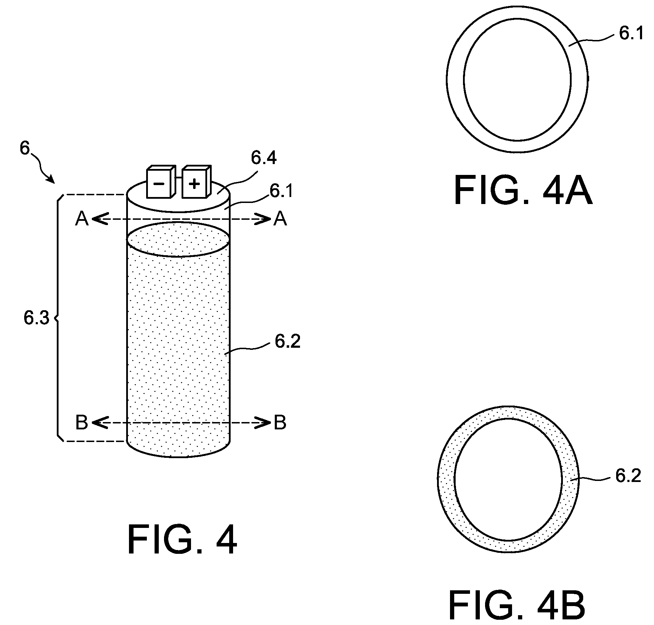

Les figures 3-3B et 4-4A représentent différents modes de réalisation d'un emballage selon l'invention, contenant un accumulateur A.

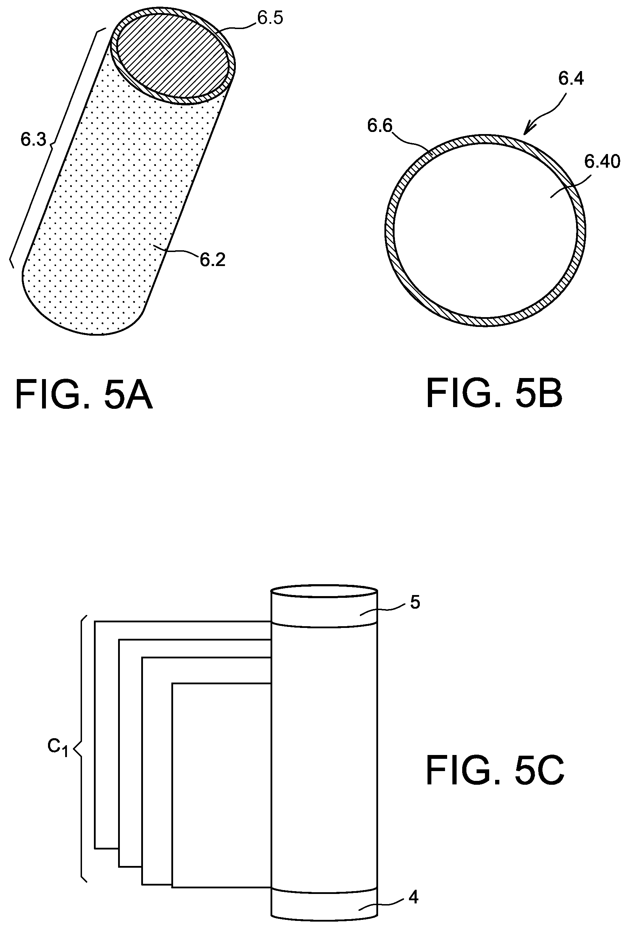

Ces modes de réalisation comportent un emballage 6, constitué d'un cylindre borgne 6.3 et d'un couvercle métallique 6.4 (figure 3). Le cylindre borgne et le couvercle métallique sont soudés entre eux par le bord périphérique 6.5 de l'ouverture du cylindre borgne 6.3 (figure 5A) et par le bord périphérique 6.6 du couvercle 6.4 (figure 5B).

L'emballage 6 représenté aux figures 3, 3A et 3B comporte un couvercle 6.4 en métal et le cylindre borgne 6.3 comprend une paroi métallique 6.1 sur toute sa hauteur (figure 3A) et une paroi 6.2 à base de polymère durci (figure 3B) sur une partie de sa hauteur. La paroi 6.2 est superposée à la paroi métallique 6.1, vers l'extérieur de l'emballage 6. L'épaisseur de la paroi métallique 6.1 et de la paroi à base de polymère durci 6.2 sont sensiblement égales.

L'emballage 6 de l'accumulateur A représenté aux figures 4, 4A et 4B, comprend un couvercle 6.4 en métal et un cylindre borgne 6.3 qui comprend uniquement une paroi métallique 6.1 sur une partie de sa hauteur (figures 4 et 4A) et uniquement une paroi 6.2 à base de polymère durci sur l'autre partie de sa hauteur (figures 4 et 4B). Pour solidariser la paroi métallique 6.1 à la paroi 6.2 à base de polymère durci, on peut utiliser tout type de techniques qui permettent de solidariser des composants polymère avec du métal, par exemple par collage, laminage, complexage de deux feuillards métal/polymère.

On décrit maintenant en référence aux figures 5A à 8B, différentes variantes de réalisations complètes d'un accumulateur A lithium-ion contenu dans un emballage 6 rigide (boitier) de forme générale cylindrique.

Etape 1: Pour fabriquer l'emballage 6 rigide on part d'un cylindre borgne 6.3 de forme générale cylindrique, à base de polymère 6.2 (figure 5A). On procède alors à la métallisation de sa partie interne: la partie métallique est symbolisée par le motif hachuré selon cet exemple. La partie métallique peut être ainsi obtenue sur les parties internes de l'emballage et éventuellement sur les parties externes, par métallisation proprement dite du polymère ou par collage, laminage, complexage de deux feuillards en métal sur l'élément en polymère. Au cours de cette étape de métallisation, on veille à réaliser une épaisseur métallique au moins égale à 0.1 mm sur le bord supérieur 6.5 du cylindre, pour permettre une soudure métallique ultérieure du couvercle 6.4 par l'intermédiaire de son bord périphérique 6.6. On précise ici que les procédés de métallisation de matière plastique de différentes formes géométriques sont largement connus. On peut citer les procédés commercialisés sous les dénominations commerciales Adhemax^{®}, Futuron^{®} ULTRA, Noviganth^{®} PA, Covertron^{®} par la société Atotech.

Le couvercle 6.4 peut être en métal, comme de l'aluminium ou en matière plastique et recouvert de métal sur sa face interne 6.40, c'est-à-dire, sur sa face destinée à être en regard de l'intérieur de l'accumulateur Li-ion (figure 5B). La partie périphérique 6.6 du couvercle 6.4 est en métal d'épaisseur au moins égale à 0,1 mm et de préférence inférieur à 0,5 mm pour permettre la soudure ou son assemblage.

Ainsi, selon l'invention, on prévoit deux zones métalliques 6.5 et 6.6 qui sont soudées entre elles pour assurer au final l'étanchéité de l'emballage de l'accumulateur Li-ion. Comme montré aux figures 5A et 5B, il est préférable que ces zones 6.5 et 6.6 soient en périphérie afin de réaliser la soudure en périphérie du couvercle 6.4. Cela permet, lors de l'assemblage, l'entrée dans l'élément cylindrique borgne 6.3 d'une cellule électrochimique enroulée, dont le diamètre externe est le plus proche du diamètre interne de l'élément 6.3.

Etape 2 : On procède indépendamment à la réalisation selon l'étape 1, des parties de l'emballage que sont l'élément métal/polymère 6.3 et le couvercle 6.4, à la réalisation des électrodes positives puis négatives des cellules électrochimiques constituant l'accumulateur Li-ion. Toutes les électrodes sont réalisées par couchage d'une encre d'électrode sur un substrat métallique formant un collecteur de courant. Le collecteur de courant peut être une feuille métallique, une grille, un polymère conducteur ou inerte mais chargé de particules conductrices, ou encore une combinaison de ces éléments. Le couchage de l'encre peut être effectué en continu pour une géométrie cylindrique ou prismatique d'accumulateur ou selon des motifs discrets pour un accumulateur à géométrie en empilement. Les électrodes sont de préférence calandrées à chaud pour obtenir la porosité souhaitée, de préférence entre 30 et 50%, typiquement 40% pour un fonctionnement optimal en puissance. Avantageusement, tous les motifs d'électrode ou électrodes à base de matériau d'insertion au lithium négatif sont à base de Li₄Ti₅O₁₂ et tous les motifs d'électrode ou électrodes à base de matériau d'insertion au lithium positif sont à base de LiFePO4. Un tel couple électrochimique Li₄Ti₅O₁₂/LiFePO4 qui offre un potentiel de 1,88 Volt présente notamment comme avantages une grande stabilité lors des tests de sécurité et des performances à régime de charge/décharge élevées.

On réalise un empilement alterné entre électrodes positives et électrodes négatives en séparant une électrode négative et une électrode positive adjacente par un séparateur microporeux isolant électrique, tel qu'en polyoléfine, en céramique ou en polymère de type PVDF.

On obtient ainsi notamment une cellule électrochimique Li-ion C1 enroulée, sous la forme d'un cylindre, avec un collecteur de courant par exemple négatif 5 en bordure d'un côté, et le collecteur de courant de polarité opposée, par exemple positif 4, en bordure de l'autre coté (figure 5C).

Etape 3 : On procède alors à la liaison électrique entre les collecteurs de courant 4, 5 en bordure de la cellule électrochimique enroulée sous la forme d'un cylindre, et les parties de collecteur 40, 50 qui au final constituent les pôles de l'accumulateur A.

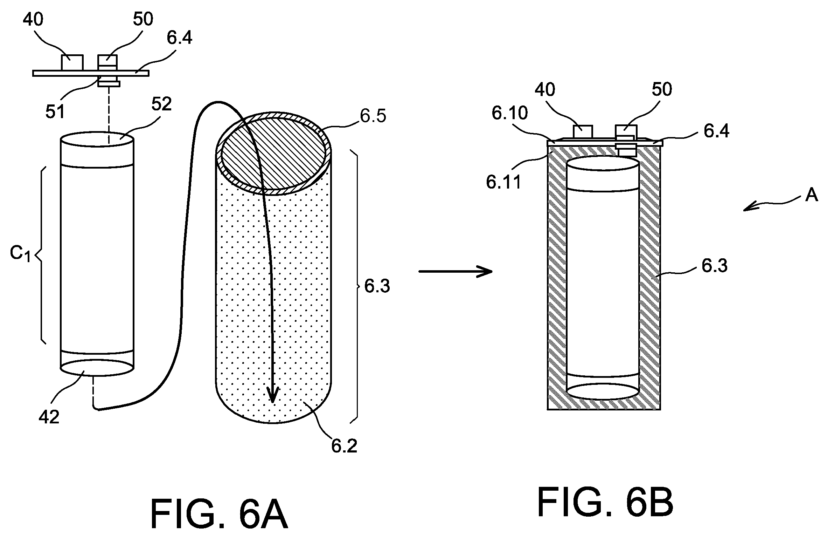

Pour cela, les bordures des collecteurs de courant 4 et 5 sont, comme usuellement, soudés à des connecteurs principaux 42, 52, représentés sous la forme de disques en figures 6A à 8B. Il peut s'agir d'un clinquant en aluminium pour l'électrode positive et d'un cliquant en cuivre nickelé pour l'électrode négative.

Ensuite, les connectiques externes, c'est-à-dire les pôles 40, 50 à l'emballage rigide (boîtier) 6, peuvent être positionnées à n'importe quel endroit du boîtier. On peut ainsi tenir compte de l'architecture finale d'un assemblage ou pack d'une pluralité d'accumulateurs selon l'invention. Pour simplifier les figures, les pôles 40, 50 externes sont représentés systématiquement positionnés au dessus du couvercle 6.4. Ces pôles 40, 50 respectivement positif (+) et négatif (-) peuvent être rapportés l'un et/l'autre par un système de serrage 41, 51 permettant une mise en pression de la partie polymère du couvercle 6.4 pour assurer l'étanchéité. Tel que représenté, le système de serrage 41, 51 peut être constitué par un système écrou/joint d'étanchéité/vis. Ces pôles 40, 50 respectivement positif (+) et négatif (-) peuvent alternativement être soudés l'un et/l'autre sur le couvercle 6.4 en métal.

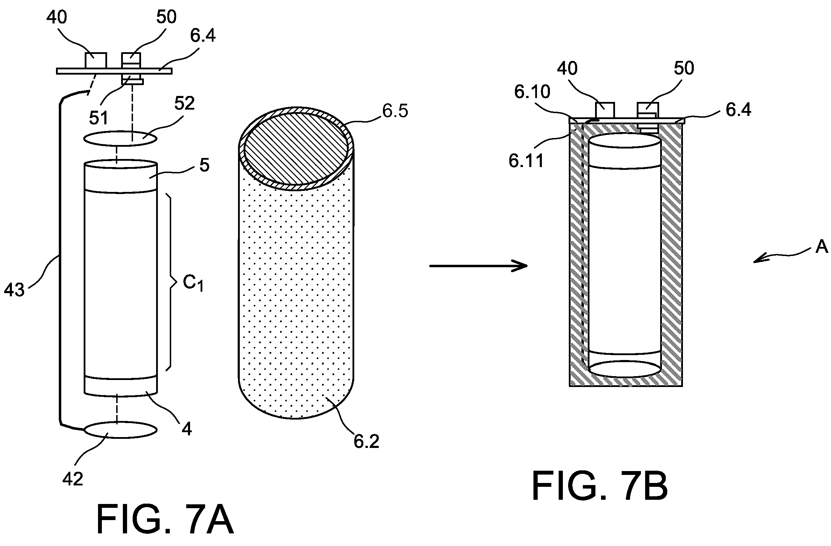

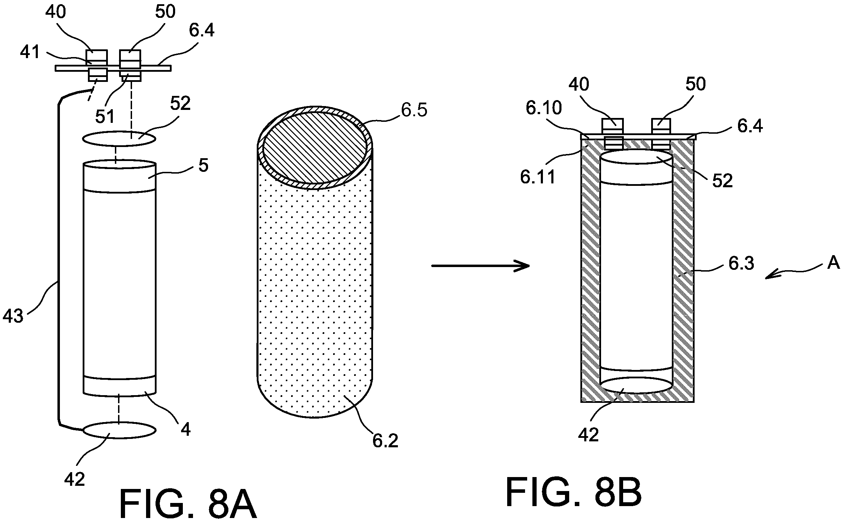

Dans les variantes de réalisation des figures 6A, 6B et 7A, 7B, le boîtier constituant l'emballage 6, c'est-à-dire, l'élément cylindrique borgne 6.3 et son couvercle 6.4, est conducteur métallique sur ses parties métalliques. Dans la variante des figures 7A, 7B et 8A, 8B, un fil métallique 43 qui longe l'élément cylindrique 6.3 est rapporté pour permettre la connexion électrique entre le connecteur principal 42 jusqu'au pôle 40 lui-même soudé au couvercle 6.4. Au lieu d'un fil métallique rapporté, on peut aussi envisager une métallisation de l'intérieur de l'élément cylindrique 6.3 selon une bande conductrice électrique. On peut encore envisager de rapporter une bande conductrice électrique le long de l'intérieur de l'élément cylindrique 6.3 du connecteur 42 jusqu'à pôle 40 soudé au couvercle 6.4.

Dans les variantes de réalisation des figures 8A, 8B, le boîtier constituant l'emballage 6, c'est-à-dire, l'élément cylindrique borgne 6.3 et son couvercle 6.4, est globalement isolant électriquement. Seules deux zones métalliques 6.6, 6.5 sont prévues respectivement à la périphérie du couvercle 6.4 et du bord supérieur de l'élément cylindrique 6.3 pour les souder entre-elle. On veille à ce que l'épaisseur métallique de ces zones à souder soit au moins égale à 1mm, pour permettre une tenue mécanique suffisante. Un apport métallique est possible à l'endroit de la soudure (métallisation par exemple).

Etape 4 : Dans le cas où la cellule électrochimique est positionnée dans le boîtier 6 avant d'être activée par un électrolyte, une ouverture est laissée au niveau du couvercle 6.4 soudé sur l'élément cylindrique 6.3. Cette ouverture est suffisamment grande pour permettre le remplissage par l'électrolyte après avoir effectué un vide primaire. L'électrolyte est de préférence un électrolyte carbonaté contenant un sel de lithium, tel que le LiPF₆. Une fois le remplissage effectué, l'ouverture est obturée à l'aide d'un rivet ou par soudure d'un élément métallique.

D'autres modes de réalisation peuvent être prévus sans pour autant sortir du cadre de l'invention, à savoir proposer un emballage d'accumulateur électrochimique de matériaux mixtes métal/polymère durci qui présente un étanchéité parfaite à long terme de part la soudure métallique et qui est de moindre poids comparativement à un emballage d'accumulateur électrochimique selon l'état de l'art.

En particulier, outre la forme cylindrique présentement identifié, une forme prismatique peut également être envisagée à l'identique.

La réduction de poids d'un accumulateur Li-ion rendue possible grâce à l'invention est particulièrement avantageuse dans une application où l'on a besoin de réaliser un assemblage ou pack d'un grand nombre d'accumulateurs Li-ion. Il peut s'agir d'une application pour véhicule automobile.

## Revendications

1. Accumulateur électrochimique (A) comprenant au moins une cellule électrochimique (C1) constituée d'une anode (3) et d'une cathode (2) de part et d'autre d'un électrolyte (1), deux collecteurs de courant dont l'un est relié à l'anode et l'autre à la cathode, et un emballage (6) agencé pour contenir la(les) cellule(s) électrochimique avec étanchéité, comportant :
- un couvercle (6.4) traversé par une partie des collecteurs de courant formant les pôles (40, 50), le couvercle comportant une première zone métallique ;
- un contenant comportant une deuxième zone métallique (6.1) et une troisième zone métallique;
- un élément (6.2) à base de polymère durci étant solidarisé à au moins la troisième zone métallique ;
l'épaisseur de la première zone métallique et l'épaisseur de la deuxième zone métallique étant adaptées de sorte à être solidarisées entre elles par soudure métallique, l'épaisseur de la troisième zone métallique étant d'épaisseur inférieure par rapport à la deuxième zone métallique.

2. Accumulateur électrochimique (A) selon la revendication 1, dans lequel l'emballage comporte un cylindre borgne (6.3) et ledit couvercle (6.4), la première zone métallique et la deuxième zone métallique (6.1) comportant respectivement le bord périphérique du cylindre borgne et le bord (6.40) périphérique du couvercle (6.4) soudés entre eux.

3. Accumulateur électrochimique (A) selon la revendication 2, dans lequel les pôles (40, 50) sont solidarisés au couvercle (6.4).

4. Accumulateur électrochimique (A) selon la revendication 2 ou 3, dans lequel le couvercle (6.4) est en métal et le cylindre borgne (6.3) est en polymère métallisé sur toute sa hauteur.

5. Accumulateur électrochimique (A) selon la revendication 2 ou 3, dans lequel le couvercle (6.4) est en métal et le cylindre borgne (6.3) comprend ladite deuxième zone métallique (6.1) sur une partie de sa hauteur et ledit élément (6.2) à base de polymère durci sur l'autre partie de sa hauteur.

6. Accumulateur électrochimique (A) selon la revendication 5, dans lequel le cylindre borgne (6.3) comprend uniquement ladite deuxième zone métallique (6.1) sur une partie de sa hauteur et ledit élément (6.2) à base de polymère durci uniquement sur l'autre partie de sa hauteur.

7. Accumulateur électrochimique (A) selon la revendication 2 ou 3, dans lequel le couvercle (6.4) est en métal et le cylindre borgne (6.3) comprend une paroi métallique (6.1) sur toute sa hauteur, ledit élément (6.2) à base de polymère durci étant superposé à la paroi métallique vers l'extérieur de l'emballage, l'épaisseur des parois métallique et à base de polymère durci sur une partie de sa hauteur du cylindre étant sensiblement égale uniquement à celle de la paroi métallique sur l'autre partie de hauteur.

8. Accumulateur électrochimique (A) selon l'une des revendications 1 à 7, dans lequel aucune zone d'interface métal/polymère n'est apparente à l'intérieur de l'emballage.

9. Accumulateur électrochimique (A) selon l'une des revendications 1 à 8, dans lequel l'épaisseur de la troisième zone métallique, qui est en contact physique avec la paroi en polymère durci, est inférieure à 0,5 mm.

10. Accumulateur électrochimique (A) selon l'une des revendications 1 à 9, dans lequel la partie, à base de polymère durci (6.2), est une matrice d'un matériau composite comprenant au moins un renfort.

11. Accumulateur électrochimique (A) selon la revendication 10, dans lequel le(s) renfort(s) est (sont) un (des) tissu(s) et/ou un (des) mat(s).

12. Accumulateur électrochimique (A) selon l'une des revendications 1 à 11, dans lequel dans lequel le polymère durci est choisi parmi une résine époxy, en polyuréthane, polyimide, acrylique ou styrénique avec une température de transition vitreuse Tg élevée.

13. Accumulateur électrochimique (A) selon la revendication 11 en combinaison avec la revendication 12, dans lequel le(s) renfort(s) sont à base de fibres de carbone et le polymère durci est une résine époxy.

14. Accumulateur électrochimique (A) selon l'une quelconque des revendications précédentes, de type Li-ion dans lequel tous les motifs d'électrode ou électrodes de la (des) cellule(s) à base de matériau d'insertion au lithium négatif sont à base de Li₄Ti₅O₁₂ et tous les motifs d'électrode ou électrodes de la (des) cellule(s) à base de matériau d'insertion au lithium positif sont à base de LiFePO4.

15. Assemblage comprenant une pluralité d'accumulateurs selon l'une des revendication 1 à 14, dans lequel :
- les pôles de polarité inverse entre deux accumulateurs adjacents sont en contact,
- ou les pôles de même polarité entre deux accumulateurs adjacents sont en contact.

## Patentansprüche

1. Elektrochemischer Akkumulator (A), enthaltend zumindest eine elektrochemische Zelle (C1), die aus einer Anode (3) und einer Kathode (2) beiderseits eines Elektrolyten (1) besteht, zwei Stromkollektoren, von denen der eine mit der Anode und der andere mit der Kathode verbunden ist, und eine Umhüllung (6), die dazu vorgesehen ist, die elektrochemische Zelle bzw. Zellen abgedichtet zu beinhalten, enthaltend:
- eine Abdeckung (6.4), durch die sich ein Teil der Stromkollektoren erstreckt, welche die Pole (40, 50) bilden, wobei die Abdeckung einen ersten metallischen Bereich aufweist,
- einen Behälter mit einem zweiten metallischen Bereich (6.1) und einem dritten metallischen Bereich,
- wobei ein Element (6.2) auf Basis von gehärtetem Polymer zumindest mit dem dritten metallischen Bereich fest verbunden ist,
wobei die Dicke des ersten metallischen Bereichs und die Dicke des zweiten metallischen Bereichs so ausgelegt sind, dass sie durch eine metallische Schweißnaht fest miteinander verbunden sind, wobei die Dicke des dritten metallischen Bereichs geringer ist als die des zweiten metallischen Bereichs.

2. Elektrochemischer Akkumulator (A) nach Anspruch 1, wobei die Umhüllung einen blinden Zylinder (6.3) und die Abdeckung (6.4) enthält, wobei der erste metallische Bereich und der zweite metallische Bereich (6.1) den umlaufenden Rand des blinden Zylinders bzw. den umlaufenden Rand (6.40) der Abdeckung (6.4) aufweisen, die miteinander verschweißt sind.

3. Elektrochemischer Akkumulator (A) nach Anspruch 2, wobei die Pole (40, 50) fest mit der Abdeckung (6.4) verbunden sind.

4. Elektrochemischer Akkumulator (A) nach Anspruch 2 oder 3, wobei die Abdeckung (6.4) aus Metall besteht und der blinde Zylinder (6.3) aus Polymer besteht, das über seine gesamte Höhe metallisiert ist.

5. Elektrochemischer Akkumulator (A) nach Anspruch 2 oder 3, wobei die Abdeckung (6.4) aus Metall besteht und der blinde Zylinder (6.3) den zweiten metallischen Bereich (6.1) über einen Teil seiner Höhe und das Element (6.2) aus gehärtetem Polymer über den anderen Teil seiner Höhe aufweist.

6. Elektrochemischer Akkumulator (A) nach Anspruch 5, wobei der blinde Zylinder (6.3) nur den zweiten metallischen Bereich (6.1) über einen Teil seiner Höhe aufweist und das Element (6.2) aus gehärtetem Polymer nur über den anderen Teil seiner Höhe aufweist.

7. Elektrochemischer Akkumulator (A) nach Anspruch 2 oder 3, wobei die Abdeckung (6.4) aus Metall besteht und der blinde Zylinder (6.3) eine Metallwand (6.1) über seine gesamte Höhe aufweist, wobei das Element (6.2) aus gehärtetem Polymer die Metallwand nach außerhalb der Umhüllung überlagert, wobei die Dicke der Wände aus Metall und aus gehärtetem Polymer über einen Teil seiner Zylinderhöhe im Wesentlichen nur gleich der Dicke der Metallwand über den anderen Teil der Höhe ist.

8. Elektrochemischer Akkumulator (A) nach einem der Ansprüche 1 bis 7, wobei kein Grenzflächenbereich Metall/Polymer innerhalb der Umhüllung ersichtlich ist.

9. Elektrochemischer Akkumulator (A) nach einem der Ansprüche 1 bis 8, wobei die Dicke des dritten metallischen Bereichs, der mit der Wand aus gehärtetem Polymer in Berührungskontakt ist, geringer als 0,5 mm ist.

10. Elektrochemischer Akkumulator (A) nach einem der Ansprüche 1 bis 9, wobei der Teil aus gehärtetem Polymer (6.2) eine Matrix aus einem Verbundmaterial mit zumindest einer Verstärkung ist.

11. Elektrochemischer Akkumulator (A) nach Anspruch 10, wobei die Verstärkung bzw. Verstärkungen ein Gewebe bzw. Gewebe und/oder ein Vlies bzw. Vliese sind.

12. Elektrochemischer Akkumulator (A) nach einem der Ansprüche 1 bis 11, wobei das gehärtete Polymer ausgewählt ist aus Epoxidharz, Polyurethan, Polyimid, Acryl oder Styrol mit einer hohen Glasübergangstemperatur Tg.

13. Elektrochemischer Akkumulator (A) nach Anspruch 11 in Kombination mit Anspruch 12, wobei die Verstärkung bzw. Verstärkungen auf Basis von Kohlenstofffasern sind und das gehärtete Polymer ein Epoxidharz ist.

14. Elektrochemischer Akkumulator (A) nach einem der vorangehenden Ansprüche, vom Typ Li-Ion, wobei sämtliche Elektrodenmuster bzw. Elektroden der Zelle(n) auf Basis von negativem Lithium-Insertionsmaterial aus Li₄Ti₅O₁₂ bestehen und sämtliche Elektrodenmuster bzw. Elektroden der Zelle(n) auf Basis von positivem Lithium-Insertionsmaterial aus LiFePO4 bestehen.

15. Anordnung mit einer Mehrzahl von Akkumulatoren nach einem der Ansprüche 1 bis 14, wobei
- die Pole mit umgekehrter Polarität zwischen zwei aneinandergrenzenden Akkumulatoren in Kontakt sind,
- oder die Pole mit gleicher Polarität zwischen zwei aneinandergrenzenden Akkumulatoren in Kontakt sind.

## Claims

1. An electrochemical accumulator (A) comprising at least one electrochemical cell (C1) consisting of an anode (3) and of a cathode (4) on either side of an electrolyte (1), two current collectors, one of which is connected to the anode and the other one to the cathode, and a packaging (6) arranged for sealably containing the electrochemical cell(s), including:
- a lid (6.4) crossed by a portion of the current collectors forming the poles (40, 50), the lid including a first metal area;
- a container including a second metal area (6.1) and a third metal area;
- an element (6.2) based on a hardened polymer being secured to at least the third metal area;
the thickness of the first metal area and the thickness of the second metal area being adapted so as to be secured together by metal welding, the thickness of the third metal area being of a thickness less than that of the second metal area.

2. The electrochemical accumulator (A) according to claim 1, wherein the packaging includes a blind cylinder (6.3) and said lid (6.4), the first metal area and the second metal area (6.1) respectively including the peripheral edge of the blind cylinder and the peripheral edge (6.40) of the lid (6.4) welded to each other.

3. The electrochemical accumulator (A) according to claim 2, wherein the poles (40, 50) are secured to the lid (6.4).

4. The electrochemical accumulator (A) according to claim 2 or 3, wherein the lid (6.4) is in metal and the blind cylinder (6.3) is in a metallized polymer over the whole of its height.

5. The electrochemical accumulator (A) according to claim 2 or 3, wherein the lid (6.4) is in metal and the blind cylinder (6.3) comprises said second metal area (6.1) over a portion of its height and said element (6.2) based on hardened polymer over the other portion of its height.

6. The electrochemical accumulator (A) according to claim 5, wherein the blind cylinder (6.3) only comprises said second metal area (6.1) over a portion of its height and said element (6.2) based on hardened polymer only over the other portion of its height.

7. The electrochemical accumulator (A) according to claim 2 or 3, wherein the lid (6.4) is in metal and the blind cylinder (6.3) comprises a metal wall (6.1) over the whole of its height, said element (6.2) based on hardened polymer being superposed to the metal wall towards the outside of the packaging, the thickness of the metal walls and based on hardened polymer over a portion of its height of the cylinder being substantially only equal to that of the metal wall on the other height portion.

8. The electrochemical accumulator (A) according to one of claims 1 to 7, wherein no metal/polymer interface area is apparent inside the packaging.

9. The electrochemical accumulator (A) according to one of claims 1 to 8, wherein the thickness of the third metal area, which is in physical contact with the hardened polymer wall, is less than 0.5 mm.

10. The electrochemical accumulator (A) according to one of claims 1 to 9, wherein the portion based on hardened polymer (6.2) is a matrix of a composite material comprising at least one reinforcement.

11. The electrochemical accumulator (A) according to claim 10, wherein the reinforcement(s) is(are) fabric(s) and/or mat(s).

12. The electrochemical accumulator (A) according to one of claims 1 to 11, wherein the hardened polymer is selected from an epoxy resin, in polyurethane, polyimide, acrylic or styrenic polymer with a high glass transition temperature Tg.

13. The electrochemical accumulator (A) according to claim 11 combined with claim 12, wherein the reinforcement(s) is(are) based on carbon fibers and the hardened polymer is an epoxy resin.

14. The electrochemical accumulator (A) according to any one of the preceding claims, of the Li-ion type, wherein all the patterns of electrode or electrodes of the cell(s) based on a material for inserting negative lithium are based on Li₄Ti₅O₁₂ and all the patterns of electrode or electrodes of the cell(s) based on a material for insertion of positive lithium are based on LiFePO₄.

15. An assembly comprising a plurality of accumulators according to one of claims 1 to 14, wherein:
- the poles of reverse polarity between two adjacent accumulators are in contact,
- or the poles of same polarity between two adjacent accumulators are in contact.
